(19) **Europäisches Patentamt**

**European Patent Office**

**Office européen des brevets**

(11) **EP 0 993 335 B1**

(12) **EUROPEAN PATENT SPECIFICATION**

(45) Date of publication and mention of the grant of the patent:
**24.04.2002   Bulletin 2002/17**

(51) Int Cl.⁷: **B01J 12/00**, B01J 8/02, B01J 19/00, B01J 19/08, C01C 3/02

(21) Application number: **98933113.7**

(22) Date of filing: **02.07.1998**

(86) International application number:
**PCT/US98/13826**

(87) International publication number:
**WO 99/01212 (14.01.1999 Gazette 1999/02)**

(54) **INDUCTIVELY HEATED CATALYTIC REACTOR**

INDUKTIV BEHEIZTER KATALYTISCHER REAKTOR

REACTEUR CATALYTIQUE A CHAUFFAGE PAR INDUCTION

(84) Designated Contracting States:
**BE DE FR GB IT NL**

(30) Priority: **03.07.1997  US 51658 P**

(43) Date of publication of application:
**19.04.2000   Bulletin 2000/16**

(73) Proprietor: **E.I. DUPONT DE NEMOURS AND COMPANY**
**Wilmington, DE 19808 (US)**

(72) Inventors:
  • **KOCH, Theodore, A.**
    **Wilmington, DE 19808 (US)**
  • **MEHDIZADEH, Mehrdad**
    **Wilmington, DE 19808 (US)**
  • **ASHMEAD, James, W.**
    **Middletown, DE 19709 (US)**
  • **BLACKWELL, Benny, E.**
    **Newark, DE 19711 (US)**
  • **KIRBY, Gregory, S.**
    **Avondale, PA 19311 (US)**
  • **SENGUPTA, Sourav, K.**
    **Wilmington, DE 19809 (US)**

(74) Representative: **Jones, Alan John et al**
**CARPMAELS & RANSFORD**
**43 Bloomsbury Square**
**London, WC1A 2RA (GB)**

(56) References cited:
**DE-A- 4 209 195        DE-A- 4 444 366**
**GB-A- 729 502          GB-A- 854 268**
**US-A- 2 443 423        US-A- 3 215 495**

• **PATENT ABSTRACTS OF JAPAN vol. 096, no. 007, 31 July 1996 & JP 08 074563 A (DENKI KOGYO CO LTD;FUJI HEAVY IND LTD), 19 March 1996**

## Description

This invention relates to a novel apparatus for producing a gas phase reaction at elevated temperature in the presence of a solid catalyst. More specifically, the invention relates to continuous flow gas phase reactor wherein a metal catalyst is heated inductively by use of an induction coil within the reactor.

Background Art

The concept of using induction heating to heat a catalyst during a gas phase chemical reaction at elevated temperature is generally known in the art. For example, U.S. Pat. No. 5,110,996 discloses a process for producing vinylidene fluoride by reacting dichlorofluoromethane with methane in an inductively heated reaction tube containing a non-metallic packing material and optionally a metallic catalyst.

DE-A-4 444 366 discloses a reactor vessel for a continuously catalytic gas phase reaction process. The reactor vessel comprises a solid phase catalyst media, an induction coil and a heating coil. The induction coil is wrapped around the exterior of the reactor and is adapted to heat the heating coil placed within the catalyst bed.

Similarly, PCT patent WO 95/21126 discloses the preparation of hydrogen cyanide by reacting ammonia and a hydrocarbon gas in an inductively heated quartz reactor tube. In this disclosure a platinum-group metal catalyst within the reactor tube is heated by the presence of an inductive coil helically wound around the exterior of the quartz tube. This coil is energized by an induction power source which could also supply pulsed power. For the particular endothermic reaction being employed in this reference, a frequency range of 0.5 to 30 MHz is suggested to maintain the reaction temperature between 600 and about 1,200°C. The induction coil wrapped around the exterior of the reactor tube is itself a metal tube through which cooling water is being circulated. The reference also suggests various forms of metal catalyst including metal gauze, ceramic substrate having metal dispersed on the surface or ceramic particles coated with metal provided that these catalysts have an electrical conductivity of at least 1.0 Siemens per meter such as to be effectively heated by induction.

Even though the inductively heated tubular reactor is generally known in the art and has been demonstrated to be useful in producing hydrogen cyanide by the endothermic reaction of ammonia and a hydrocarbon such as methane, it has now been discovered that certain deficiencies exist that can be attributed, at least in part, to the design of the prior art reactors. Problems in principle are encountered as the reactor size is scaled up and will be particularly critical for reactions which are sensitive to temperature, potentially being reflected in one or more of the following: decreased conversion to desired product, increased unwanted side reactions products, and/or less than optimum selectivity. Furthermore, material of construction of the reactor could pose significant challenge during design and scale-up. The present invention addresses these concerns.

Disclosure of the Invention

In view of the above potential problems associated with prior art inductively heated gas phase chemical reactors, it has now been discovered that by placing the main inductive coil directly within the tubular reactor substantially across the entire cross section of the reactor, providing for gas flow there through, and using this coil directly as the energy source improves temperature control and more uniform heating of the metallic catalyst can be achieved. These improvements may in part be rationalized as being due to improved ability to control the spatial relationship between the induction power source and the inductively heated metallic catalyst, i.e., both more uniform radial distribution within the reactor and closer proximity. This in turn allows for scaling up to larger reactor cross sections without significantly reducing either conversion or selectivity even in cases of temperature sensitive gas phase reactions such as the production of hydrogen cyanide from ammonia and a hydrocarbon or the like.

Thus the present invention provides an improved apparatus for continuously conducting a catalyzed gas phase reaction at elevated temperature comprising:

(a) a reactor vessel comprising at least one gaseous reactant inlet means and at least one product outlet means for introducing gaseous reactant into and removing product from the reactor vessel, respectively;
(b) at least one solid phase catalyst media operatively positioned within the reactor vessel such as to make contact with gaseous reactant passing from the reactant inlet means to the product outlet means and operatively adapted such as be heated inductively; and
(c) at least one induction coil means operatively positioned within the reactor vessel substantially across the entire reactor vessel in the proximity of said solid phase metallic catalyst media such as to directly and inductively heat the solid phase catalyst media and operatively positioned for the passage of gas therethrough.

In one specific embodiment on the invention the induction coil is a pancake-type coil consisting essentially of a planar spiral of metal tubing having a spiral spacing between successive loops to accommodate gas flow therebetween. In this embodiment, the plane of the pancake-type coil is positioned substantially across the entire gaseous flow within the reactor vessel in the proximity of the solid phase metallic catalyst media. In another specific embodiment, the induction coil is a conical shaped coil consisting essentially of a conical spiral of metal tubing having spiral and helical spacing between successive loops to accommodate gas flow, and the base plane of the conical shaped coil is likewise so positioned.

Brief Description of Drawings

Figure 1 is a cross-sectional view of a quartz reactor according to the present invention particularly suited for producing hydrogen cyanide.
Figure 2 is a cross-sectional view of a stainless steel reactor according to the present invention particularly suited for producing hydrogen cyanide.
Figure 3 is a cross-sectional view of an alternate embodiment a stainless steel reactor of Figure 2.

Modes for carrying Out the Invention

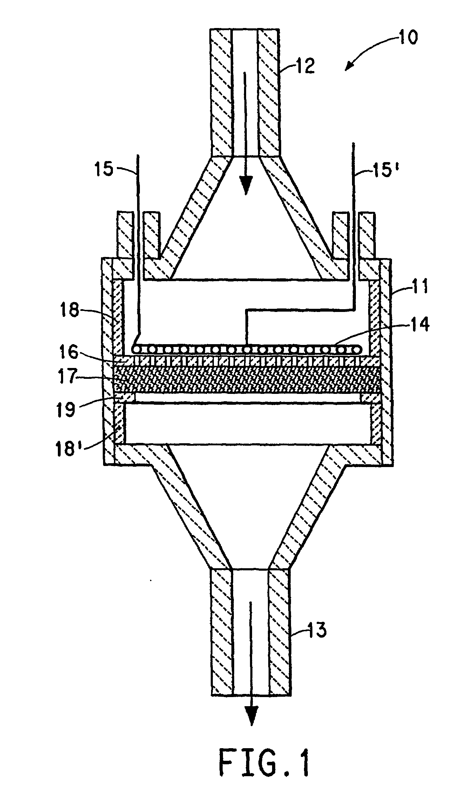

The improved inductively heated reactor according to the present invention, how it is used to conduct a gas phase chemical reaction at elevated temperature, how it operates and differs from previously known inductively heated reactors, and the advantages and benefits associated with its use can perhaps be best explained and understood by reference to the drawings. For example, Figure 1 illustrates a quartz reactor, generally designated by the numeral 10, which is particularly useful for producing hydrogen cyanide by what is commonly referred to as the Degussa process. The Degussa process typically involves the catalytic reaction of ammonia and a hydrocarbon such as methane at elevated temperature, typically greater than 1200°C, to produce hydrogen cyanide according to the following endothermic reaction;

$$CH_4 + NH_3 \rightarrow HCN + 3\,H_2$$

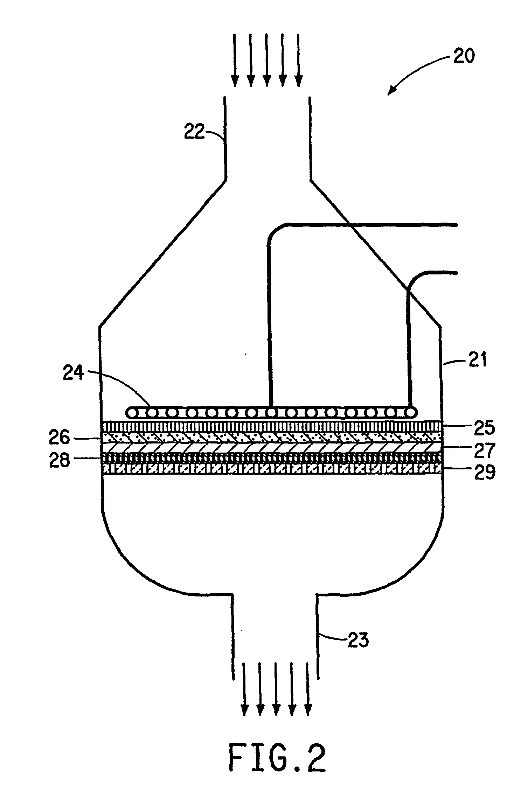

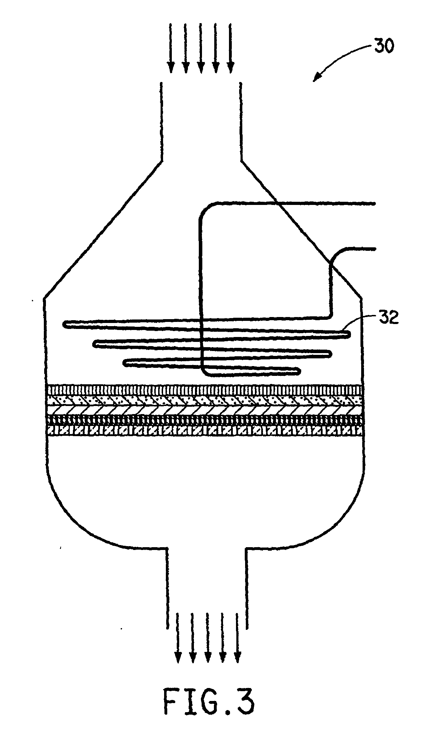

Figures 2 and 3 illustrate alternate embodiments of stainless steel reactors, generally designated by the numerals 20 and 30, respectively. In contrast to the reactor of Figure 1, reactors 20 and 30 are particularly useful for producing hydrogen cyanide by either the Degussa process or by what is commonly recognized as the exothermic Andrussow process. It should be further appreciated that although the improved inductively heated reactor according to the present invention is being described and specifically illustrated relative to the high temperature gas phase production of hydrogen cyanide it is felt that the invention should not be viewed as being limited to any given reaction. Many of the advantages and benefits associated with the improved reactor are equally realized in other elevated temperature gas phase reactions and processes. As such any interpretation of the following description and claims should not be unduly limited.

As illustrated in Figure 1, the inductively heated reactor 10 in this specific embodiment involves a generally cylindrical quartz or quartz lined reactor vessel 11 having at one end a conical shaped inlet 12 through which the reactants methane and ammonia are introduced. At the other end is a similar conical shaped exit 13 for withdrawal of product hydrogen cyanide and hydrogen. Within the reactor vessel 11 is a spiral pancake-type coil 14 with leads 15 and 15' entering and exiting the reactor. The pancake-type coil 14 is fabricated from metal tubing (e.g., copper tubing or the like) and as such could have cooling water or other heat exchange medium passed there through. Also, the pancake-type coil 14 is further adapted to act as the primary induction coil by being attached (not shown) to an induction power source. This pancake-type coil is suspended substantially across the interior of the reactor vessel 11 directly adjacent to a perforated diffuser plate 16. The diffuser plate 16 consists of a pattern of small diameter holes drilled in off set rows such as to fill approximately a third of the diffuser plate surface area. Typically this diffuser plate is made of quartz or non-conductive ceramic. Alternatively, the diffuser plate can be made from a ceramic foam. The diffuser plate also serves to electrically insulate the induction coil 14 form the inductively heated catalyst 17 positioned on the other side of the diffuser plate 16. This catalyst 17 in this specific embodiment is a plurality of layers of platinum metal fabric, wire or gauze (e.g., Pt-Rh wrapped on alumina or the like). A pair of cylindrical quartz spacers 18 and 18' and support ring 19 compressively hold the diffuser plate 16 and catalyst 17 suspended within the reactor vessel 11 in the proximity of the pancake-type coil 14 during use. It should be appreciated that various other types of structure and support members can be used to hold the catalyst and induction coil suspended within the reactor vessel.

Figure 2 illustrates a stainless steel reaction vessel 21 with reactant inlet 22 and product outlet 23. Similar to Figure 1, a pancake-type coil 24 is suspended within the reactor 20 substantially spanning the entire cross section of the interior of the reaction vessel 21 and perpendicular to the gas flow path. In this specific embodiment the pancake-type coil 24 is directly adjacent to a Fiberfrax blanket 25 which minimizes heat loss and provides a final filtration of the feed gas passing there through. Directly below the Fiberfrax blanket 25 is a layer of alumina foam which serves as a radiation shield 26 (i.e., shielding the reactant gaseous mixture entering the reactor from premature ignition). Below this radiation shield 26 is the metallic catalyst media 27. The catalyst 27 rests on a perforated ceramic under-support layer 28 having holes of smaller diameter than the catalyst particles being supported. Below this ceramic under-support is a second ceramic under-support 29 of even larger perforations.

This specific embodiment being illustrated in Figure 2 further demonstrates how the improved inductively heated reactor of the present invention is viewed as being generally applicable and useful for a variety of different types of high temperature gas phase catalytic reactions. More specifically and as illustrated, the catalyst is not limited to being a metal wire, fabric or gauze but in fact can be particulate, coated particles or mixtures of different type of particles. Also, the use of a thermally insulating layer and/or a radiation shield layer between the induction coil and the heated catalyst media affords the opportunity to use such reactors in a number of different reactions and minimizes temperature rise (i.e., in the flow of cooling media) through the induction coil.

Figure 3 illustrates an alternative embodiment of the reactor shown in Figure 2. In this specific embodiment, the reactor, generally designated by the numeral 30, contains essentially the same thermal insulating layer, radiation shield layer, catalyst media and under support members as that shown in Figure 2. However, the induction coil 32 in this embodiment is a spiral wound, helical metallic tubular coil positioned within the reactor 30 directly above the catalyst media.

The actual construction of the improved reactor according to the present invention involves any of the conventional materials generally known in the art as being useful in making inductively heated reactors. Preferably and as illustrated in the figures, the reactor is made of materials such as quartz, quartz lined, ceramic, ceramic coated, stainless steel or the like. It is also envisioned that various coatings or protective cladding can be advantageously employed depending on the particular reaction conditions. The particular fabrication techniques employed to assemble the reactor can similarly be any such methods generally known in the art including by way of example but not by limitation, welding of metallic components, and/or bonding using ceramic-epoxy type adhesives or compressive gaskets and the like. In general the choice of particular materials as well as catalyst media depends on what particular chemical reaction and conditions are to be used.

The catalyst media involves a metal or metallic composite capable of being inductively heated. Generally, this catalyst media can be in the form of one or more layers of metallic fabric, gauze (e.g., laser perforated metal foil, woven or non-woven wire mesh, or the like), discrete planar metallic objects (e.g., metal foam) or multiple layers of pellet-type catalyst particles. Such forms of catalyst are more fully disclosed and described in WO 95/21126 and commonly assigned, copending U.S. patent application number 08/887,549 filed July 3, 1997. It is further contemplated that the use of alternate layers of catalyst and induction coil within a single reactor would be operative for purposes of the present invention.

The inductively heated tubular reactor of the present invention is viewed as being useful over a broad frequency range from typically 50 Hz up to about 30 MHz. In principle, any elevated temperature, catalyzed, gas phase chemical reaction can be performed in the improved reactor according to the present invention. Preferably, a platinum-group metal catalyst media is employed to manufacture hydrogen cyanide by reacting ammonia and a hydrocarbon. Further details of such reaction and methods of accomplishing the same can be found in the incorporated references WO 95/221126 and U.S. patent application 08/887,549.

The following examples are presented to more fully demonstrate and further illustrate various individual aspects and features of the present invention and the showings are intended to further illustrate the differences and advantages of the present invention. As such the examples are felt to be non-limiting and are meant to illustrate the invention but are not meant to be unduly limiting.

Examples 1 through 4

HCN was prepared by reacting a slight molar excess of ammonia with methane in a continuous flow fixed-bed reactor which was inductively heated with a pancake-type coil as shown in Figure 1. The ratios far ammonia and methane are shown in Table 1 below. The reactor was essentially a quartz cylinder, 5.0 cm in diameter and 20 cm in length with appropriate fittings to connect feed manifold and product delivery unit. The catalyst was comprised of 20 sheets of 80 mesh 90 wt% platinum and 10 wt% rhodium gauze having a thickness of 0.4 mm. Heating of the catalyst bed was achieved by coupling the energy from the power source to the main coil enclosed in the reactor. The reactor feed system was designed to allow up to two gas feeds into the reaction zone at a constant flow rate. The gases were metered and monitored using Brooks® mass flow controllers. Product identification and quantification were made by gas chromatography. Induction heating was supplied at a constant frequency of 26 MHz and the forward and reflected powers were adjusted to obtain desired total output. Reaction conditions, conversion, yields, etc. are presented in the Table 1.

TABLE 1

| Example | Flow rate | | Residence | Total | Conversion | | Yields |
|---|---|---|---|---|---|---|---|
| No. | $NH_3$ | $CH_4$ | time | Power | $NH_3$ | $CH_4$ | HCN |
| | (sccm) | | (sec.) | (watts) | (%) | | (%) |
| 1 | 58 | 50 | 1.6 | 750 | 79.4 | 80.3 | 66.9 |
| 2 | 58 | 50 | 1.6 | 750 | 80.9 | 81.0 | 68.3 |
| 3 | 58 | 50 | 1.6 | 750 | 81.2 | 81.0 | 69.2 |
| 4 | 58 | 50 | 1.6 | 900 | 95.3 | 94.1 | 79.3 |

Industrial Applicability

The benefits and advantages associated with the improved inductively heated reactor according to the present invention are felt to be numerous and significant. First and foremost, the use of the induction coil within the reactor vessel in the proximity of the metallic catalyst media leads to more uniform control of temperature. Consequently, problems associated with prior art inductively heated reactors such as temperature gradient induced side reactions and decreased conversion/selectivity are alleviated. Also, the improved reactor design affords the opportunity to scale-up particularly relative to the use of larger cross-sectional dimensions. Thus the improved reactor leads to more flexibility of design and choice of materials of construction, as well as method of operation and can be retrofitted into existing reactors. Using the induction coil within the reactor vessel as the energy source may also result in achieving higher heat input per unit volume for larger reactor diameters than for external coil cases where bed height limits the number of coil turns. Consequently the improved reactor is useful for performing very fast gas phase reactions in that it affords the use of a bed configuration (e.g., disk shaped) which has inherently lower pressure drop because of smaller bed height.

Having thus descried and exemplified the invention with a certain degree of particularity, it should be appreciated that the following claims are not to be so limited but are to be afforded a scope commensurate with the wording of each element of the claim and equivalents thereof.

**Claims**

1. An apparatus for continuously conducting a catalyzed gas phase reaction at elevated temperature comprising:

   (a) a reactor vessel (11) comprising at least one gaseous reactant inlet means (12) and at least one product outlet means (13) for introducing gaseous reactant into and removing product from said reactor vessel, respectively;
   (b) at least one solid phase metallic catalyst media (17) operatively positioned within said reactor vessel such as to make contact with gaseous reactant passing from said reactant inlet means to said product outlet means and operatively adapted such as be heated inductively; and
   (c) at least one induction coil means (14) operatively positioned within said reactor vessel substantially across the entire reactor vessel in the proximity of said solid phase metallic catalyst media such as to directly and inductively heat said solid phase metallic catalyst media and operatively positioned for the passage of gas therethrough.

2. An apparatus of Claim 1 wherein said induction coil means is a coil (24) consisting essentially of a planar spiral of metal tubing having a spiral spacing between successive loops to accommodate gas flow therebetween and wherein the plane of said coil is positioned substantially across the entire gaseous flow within said reactor vessel in the proximity of said solid phase metallic catalyst media.

3. An apparatus of Claim 1 wherein said induction coil means is a conical shaped coil (24) consisting essentially of a conical spiral of metal tubing having spiral and helical spacing between successive loops to accommodate gas flow therebetween and wherein the base plane of said conical shaped coil is positioned substantially across the entire gaseous flow within said reactor vessel in the proximity of said solid phase metallic catalyst media.

**EP 0 993 335 B1**

**Patentansprüche**

1. Vorrichtung zur kontinuierlichen Ausführung einer katalysierten Gasphasenreaktion bei erhöhter Temperatur, wobei die Vorrichtung aufweist:

   (a) einen Reaktionsbehälter (11) mit mindestens eine Einlaßeinrichtung (12) für einen gasförmigen Reaktionspartner und mindestens einer Produktauslaßeinrichtung (13) zum Einleiten eines gasförmigen Reaktionspartners in den Reaktionsbehälter bzw. zum Entfernen des Produkts aus dem Reaktionsbehälter;
   (b) mindestens ein metallisches Festphasen-Katalysatormedium (17), das operativ in dem Reaktionsbehälter angeordnet ist, um in Kontakt mit dem gasförmigen Reaktionspartner zu kommen, der von der Reaktionspartner-Einlaßeinrichtung zur Produktauslaßeinrichtung fließt, und der im Betrieb so angepaßt ist, daß er induktiv erwärmt wird; und
   (c) mindestens eine Induktionsspuleneinrichtung (14), die im Betrieb innerhalb des Reaktionsbehälters im wesentlichen quer durch den gesamten Reaktionsbehälter in der Nähe des metallischen Festphasen-Katalysatormediums so angeordnet wird, daß sie das metallische Festphasen-Katalysatormedium direkt und induktiv erwärmt, und die im Betrieb für den Durchgang von Gas angeordnet ist.

2. Vorrichtung nach Anspruch 1, wobei die Induktionsspuleneinrichtung eine Spule (24) ist, die im wesentlichen aus einer ebenen Metallrohrspirale mit einem Spiralabstand zwischen aufeinanderfolgenden Windungen zur Aufnahme eines dazwischen hindurchfließenden Gasstroms besteht; und wobei die Spiralebene im wesentlichen quer zum Gesamtgasstrom innerhalb des Reaktionsbehälters in der Nähe des metallischen Festphasen-Katalysatormediums angeordnet ist.

3. Vorrichtung nach Anspruch 1, wobei die Induktionsspuleneinrichtung eine kegelförmige Spule (24) ist, die im wesentlichen aus einer kegelförmigen Metallrohrspirale besteht, die einen Spiral- und Wendelabstand zwischen aufeinanderfolgenden Windungen aufweist, um dazwischen einen Gasstrom aufzunehmen, und wobei die Basisfläche der kegelförmigen Spule im wesentlichen quer zur gesamten Gasströmung innerhalb des Reaktionsbehälters in der Nähe des metallischen Festphasen-Katalysatormediums angeordnet ist.

**Revendications**

1. Dispositif destiné à mener en continu une réaction en phase gazeuse catalysée à température élevée comprenant:

   (a) une cuve à réaction (11) comprenant au moins un moyen d'entrée de réactif gazeux (12) et au moins un moyen de sortie de produit (13) pour respectivement introduire le réactif gazeux dans ladite cuve à réaction et retirer le produit de celle-ci;

   (b) au moins un milieu catalyseur métallique en phase solide (17) positionné fonctionnellement dans ladite cuve à réaction de façon à réaliser un contact avec le réactif gazeux passant dudit moyen d'entrée de réactif audit moyen de sortie de produit et adapté fonctionnellement pour être chauffé par induction; et

   (c) au moins un moyen formant bobine d'induction (14) positionné fonctionnellement dans ladite cuve à réaction sensiblement à travers toute la cuve à réaction à proximité dudit milieu catalytique métallique en phase solide de façon à chauffer directement par induction ledit milieu catalytique métallique en phase solide, et positionné fonctionnellement pour le passage du gaz à travers lui.

2. Dispositif selon la revendication 1, dans lequel ledit moyen formant bobine d'induction est une bobine (24) constituée essentiellement d'une spirale plane d'un tube métallique comportant un espacement spiralé entre des boucles successives pour autoriser l'écoulement de gaz entre elles, et dans lequel le plan de ladite bobine est positionné sensiblement à travers tout l'écoulement gazeux dans ladite cuve à réaction à proximité dudit milieu catalytique métallique en phase solide.

3. Dispositif selon la revendication 1, dans lequel ledit moyen formant bobine d'induction est une bobine de forme conique (24) constituée essentiellement d'une spirale conique d'un tube métallique comportant un espacement spiralé et hélicoïdal entre des boucles successives pour autoriser l'écoulement de gaz entre elles, et dans lequel le plan de base de ladite bobine de forme conique est positionné sensiblement à travers tout l'écoulement gazeux dans ladite cuve à réaction à proximité dudit milieu catalytique métallique en phase solide.

FIG.1

FIG.2

FIG.3